# EUROPEAN PATENT SPECIFICATION

(11) **EP 2 916 972 B1**
(45) Date of publication and mention of the grant of the patent: **06.12.2017**
(21) Application number: 13727421.3
(22) Date of filing: 10.05.2013
(51) Int. Cl.: B21B 1/22, B21B 27/00, B21H 8/00, B24C 1/06, C21D 7/06

(54) **METHOD FOR SURFACING A WORK ROLL FOR ROLLING ALUMINUM SHEET AND WORK ROLL SURFACED BY THIS METHOD.**
VERFAHREN ZUR OBERFLÄCHENBEHANDLUNG EINER WALZE ZUM WALZEN VON ALUMINIUMBLECH UND DURCH DAS VERFAHREN HERGESTELLTE WALZE
MÉTHODE POUR LE TRAÎTEMENT DE LA SURFACE D'UN ROULEAU POUR LE LAMINAGE D'UNE TÔLE D'ALUMINIUM ET ROULEAU FABRIQUÉ À L'AIDE DE CETTE MÉTHODE

(30) Priority: 09.11.2012 US 201213673468; 09.11.2012 WO PCT/US2012/064460
(43) Date of publication of application: 16.09.2015
(73) Proprietor: Arconic Inc., Pittsburgh, PA 15212 (US)
(72) Inventor: SHEU, Shen, Murrysville, PA 15668 (US); WISE, Julie, A., Natrona Heights, PA 15065 (US); KASUN, Tom, J., Export, PA 15632 (US); WHITTLE, Neville, C., Irwin, PA 15642 (US); EPP, June, M., Pittsburgh, PA 15239 (US); COLEMAN, David, E., Murrysville, PA 15668 (US); PANSERI, Norman, J., Irwin, PA 15642 (US); MARCILLA GOMIS, Salvador, A., E-03540 Alicante (ES); STEWART, Patricia, A., Pittsburgh, PA 15230-1363 (US)
(74) Representative: Trinks, Ole
(86) International application number: PCT/US2013/040599
(87) International publication number: WO 2014/074160

(56) References cited:
- EP-A1- 1 344 580
- EP-A2- 0 279 773
- WO-A1-01/66276
- PAWELSKI O ET AL: "EINFLUSS UNTERSCHIEDLICHER ARBEITSWALZEN-AUFRAUHVERFAHREN AUF DIE OBERFLAECHENFEINSTRUKTUR BEIM NACHWALZEN VON KAROSSERIEBLECHEN", STAHL UND EISEN, VERLAG STAHLEISEN, DUSSELDORF, DE, vol. 114, no. 6, 13 June 1994 (1994-06-13) , pages 183-188,305, XP000448210, ISSN: 0340-4803
- BENEDICT E M: "ROLL KNURLING at South Works of U. S. Steel", IRON AND STEEL ENGINEER,, vol. 32, no. 4, 1 April 1955 (1955-04-01), pages 57-62, XP001381542,

## Description

### CROSS REFERENCE TO RELATED APPLICATIONS

### FIELD

The present invention relates to rolled sheet metal and surfacing thereof, and more particularly, to methods and apparatus for producing specific surface textures having associated frictional and optical characteristics, such as an isotropic surface on aluminum sheet.

### BACKGROUND

Currently, aluminum sheet producers often use a cold rolling mill to produce sheet of a desired thickness, width and surface. Skin/temper rolling mills may also be used with low reductions (<10%) to produce desired surfaces. The surface of the cylindrical rolls (work rolls) through which the sheet aluminum passes may be prepared for a rolling operation by grinding with an abrasive grinding wheel or belt. Grinding leaves the roll surface with a directional appearance due to grinding marks (grain), which are then transferred/imparted to a sheet that is rolled by the ground work roll. The directional appearance of sheet rolled by ground work rolls is visible and frequently can be seen through painted coatings applied to the sheet material or to products made from the sheet material, such as an automobile body panel.

Embossing mills are also used to impart a given surface topography on sheet metal, e.g., to produce non-directional topographies. Processing sheet in an embossing mill is conducted after the rolling process and after the sheet has been reduced in thickness to target dimensions that approximate the final dimensions of the sheet. Embossing mills are intended to impart surface texture only, as opposed to having a substantial sizing effect on the sheet, and therefore operate on sheet that has already been rolled by the work rolls of a rolling mill. Embossing sheet in an embossing mill represents additional steps beyond rolling, requiring additional apparatus, material handling and managing a greater variety of roll types compared to normal rolling mills.

### SUMMARY

The document WO 2001/66276 A1 relates to the texturing of rolls for rolling sheet and plate metals, such as aluminum and aluminum alloys, other metals and their alloys, laminate and composites, where the rolled sheet or plate is textured by the textured roll.

The present disclosure relates to a method for surfacing a work roll for rolling aluminum sheet. In accordance with one approach, the method includes indenting a surface of the work roll with spherical media, producing a surface 60% to 100% covered by the indentations, the indentations lacking facets.

In one approach, the indentations have a depressed central area relative to a mean height of the surface and a raised, smooth peripheral lip having a greater height at an apex thereof than the mean height of the surface.

In one approach, the indentations have a diameter in the range of 200µm to 400µm and a depth relative to the apex of the peripheral lip in the range of 0.5µm to 2.0µm.

In one approach, the spherical media used for indenting is steel ball bearings.

In one approach, the ball bearings have a diameter ≤ 0.3175 cm (0.125 inches) and a hardness Rc ≥ 60.

In one approach, the spherical media used for indenting is ceramic balls.

In one approach, a work roll for rolling aluminum sheet metal is surfaced with spherical media, producing a surface 60% to 100% covered by the indentations, the indentations lacking facets.

In one approach, aluminum sheet metal has a surface texture imparted by the work roll.

In one approach, a work roll for rolling aluminum sheet metal is surfaced by with spherical media, producing a surface 60% to 100% covered by the indentations, the indentations lacking facets and having a depressed central area relative to a mean height of the surface and a raised, smooth peripheral lip having a greater height at an apex thereof than the mean height of the surface, the indentations having a diameter in the range of 200µm to 400µm and a depth relative to the apex of the peripheral lip in the range of 0.5µm to 2.0µm.

In one approach, aluminum sheet metal has a surface texture imparted by the work roll.

In one approach, the following additional steps are conducted: installing the surfaced work roll in a rolling mill; and rolling the aluminum sheet to reduce the aluminum sheet from a given initial thickness to a selected thickness and simultaneously imparting a texture from the work roll onto the surface of the aluminum.

In one approach, the indentations have a depressed central area relative to a mean height of the surface and a raised, smooth peripheral lip having a greater height at an apex thereof than the mean height of the surface the indentations having a diameter in the range of 200µm to 400µm and a depth relative to the apex of the peripheral lip in the range of 0.5 µm to 2.0µm and wherein the reduction in thickness of the aluminum sheet is in the range of 10 to 60% of the initial thickness.

In one approach, the step of pre-grinding the work roll is conducted prior to surfacing, the step of pre-grinding imparting a first surface texture on the roll, the step of surfacing imparting a second surface texture on the roll at least partially over-struck on the first surface texture and incompletely eradicating the first surface texture, such that a composite surface texture is formed.

In one approach, the step of indenting is by shot peening, which may be conducted at an adjustable pressure to control media velocity and momentum when the media impacts the roll, the media and the velocity thereof corresponding to a media impression depth, width and shape on the surface of the roll and further comprising the step of adjusting the pressure at which shot peening is conducted to achieve a given surface texture.

In one approach, the dwell time of shot peening of the roll surface is adjustable to control the number of impacts of the media on the surface of the roll and the consequential % coverage of media impressions on the surface of the roll and further comprising the step of adjusting the dwell time to achieve a given surface texture.

In one approach, the surface texture of the roll is optically diffuse and specular.

In one approach, the following additional steps are conducted : rolling a plurality of sheets of aluminum, the sheets differing in width and at least one variation in width resulting in rolling a narrower sheet followed by rolling a wider sheet.

In one approach, the adjustment of the velocity of the media is determined at least partially based upon the hardness of the roll.

In one approach, the adjustment of the velocity of the media is determined at least partially by the initial surface texture of the roll prior to shot-peening.

In one approach, a method for surfacing a work roll for rolling aluminum sheet includes the steps of: (A) positioning the work roll parallel another roll with a gap therebetween; (B) turning at least one of the work roll and the another roll; (C) feeding surfacing media into the gap, the media bridging the gap and being drawn through the gap by the turning work roll and creating impressions on the surface of the work roll.

In one approach, the media has discrete units having a dimension larger than the gap, such that a mechanical interference exists when the units pass through the gap.

In one approach, the units are spherical and the impressions are smooth indentations.

In one approach, the units are ball bearings.

In one approach, the units are joined to a sheet of flexible material.

In one approach, the surfacing media is a metal shim having a texture on at least one side.

In one approach, the shim is produced using photolithography.

In one approach, a method for surfacing a work roll for rolling aluminum sheet includes the steps of: (A) positioning an ultrasonic ball peening apparatus proximate the work roll; (B) peening the work roll until the surface is 60% to 100% covered by indentations lacking facets, the indentations having a depressed central area relative to a mean height of the surface and a raised, smooth peripheral lip having a greater height at an apex thereof than the mean height of the surface, the indentations having a diameter in the range of 200µm to 400µm and a depth relative to the apex of the peripheral lip in the range of 0.5 µm to 2.0µm.

In one approach, a method for surfacing a work roll for rolling aluminum sheet includes the steps of: (A) pressing a rotatable knurling wheel with a peripheral surface texture against a side surface of the work roll; (B) turning the work roll, inducing the knurling wheel to turn and impressing the peripheral surface texture into the side surface of the work roll until the side surface of the work roll is 60% to 100% covered by indentations lacking facets, the indentations having a depressed central area relative to a mean height of the surface and a raised, smooth peripheral lip having a greater height at an apex thereof than the mean height of the surface, the indentations have a diameter in the range of 200µm to 400µm and a depth relative to the apex of the peripheral lip in the range of 0.5 µm to 2.0µm.

### Brief Description of the Drawings

For a more complete understanding of the present invention, reference is made to the following detailed description of exemplary embodiments considered in conjunction with the accompanying drawings.
FIGS. 1a and 1b are a plan view and a perspective (3D) view graphical mappings, respectively, of surface morphology of a sample surface of a working roll produced by EDT texturing and as measured by optical profilometry.
FIG. 2 is a diagrammatic view of an apparatus for surfacing a work roll in accordance with an embodiment of the present disclosure.
FIG. 3a is a plan view graphical mapping of surface morphology of a sample surface of a working roll produced by a process in accordance with an embodiment of the present disclosure and as measured by optical profilometry. FIG. 3b is an enlarged view of a fragment of FIG. 3a, and FIGS. 3c and 3d are perspective graphical mappings of the surfaces shown in FIGS 3a and 3b, respectively, as measured by optical profilometry.
FIGS. 4a and 4b are plan view and perspective (3D) view graphical mappings, respectively, of surface morphology of a sample surface of a working roll produced by a process in accordance with an embodiment of the present disclosure, as measured by optical profilometry.
FIG. 5a is a plan view graphical mapping of surface morphology of a sample of rolled aluminum sheet in accordance with an embodiment of the present disclosure and rolled by a working roll produced by a process in accordance with an embodiment of the present disclosure, as measured by optical profilometry. FIG. 5b is an enlarged view of a fragment of FIG. 5a, and FIGS. 5c and 5d are perspective graphical mappings of the surfaces shown in FIGS 5a and 5b, respectively, as measured by optical profilometry.
FIGS. 6a, 6b and 6c are plan view graphical mappings of surface morphology of three samples of rolled aluminum sheet in accordance with an embodiment of the present disclosure and rolled by a working roll produced by a process in accordance with an embodiment of the present disclosure at 10% reduction, 20% reduction and 40% reduction, respectively, as measured by optical profilometry. FIGS. 6d, 6e, and 6f are perspective graphical mappings of the surfaces shown in FIGS 6a, 6b and 6c, respectively, as measured by optical profilometry.
FIGS 7a and 7b are photographs of working rolls that have been surfaced in accordance with an embodiment of the present invention and FIGS. 7c and 7d are enlarged photographs of fragments of FIGS 7a and 7b, respectively.
FIG. 8 is a graph of the influence of surface texture on the coefficient of friction.
FIG. 9 is a schematic diagram of a process for developing a surface texture in accordance with an exemplary embodiment of the present disclosure.
FIG. 10 is a diagrammatic view of an apparatus for surfacing a work roll in accordance with another embodiment of the present disclosure.
FIG. 11 is a diagrammatic view of an apparatus for surfacing a work roll in accordance with another embodiment of the present disclosure.
FIGS. 12 and 13 are perspective and cross-sectional views, respectively, of a media sheet for surfacing a work roll in accordance with another embodiment of the present disclosure.
FIG. 14 is a diagrammatic view of an apparatus for generating a shim for surfacing a work roll in accordance with another embodiment of the present disclosure.
FIG. 15 is a diagrammatic view of an apparatus for surfacing a work roll in accordance with another embodiment of the present disclosure.
FIG. 16 is a diagrammatic view of an apparatus for surfacing a work roll in accordance with another embodiment of the present disclosure.

### Detailed Description of Exemplary Embodiments

An aspect of the present disclosure is the recognition that for many applications of sheet metal, it is desirable to have a uniform, non-directional surface finish, i.e., a surface which appears isotropic and reflects light diffusely. Further, the present disclosure recognizes that in addition to appearance effects, the directionally oriented roughness of a sheet surface rolled by ground work rolls influences forming processes that may be used to form the sheet metal into a shaped product, such as an automobile panel, e.g., attributable to variations in frictional interaction between the forming tool and the sheet stock due to directionally oriented grain/grinding patterns in the surface of the metal sheet that were imparted by the work roll. The present disclosure also recognizes that a more isotropic surface is beneficial in conducting some forming processes that operate on aluminum sheet.

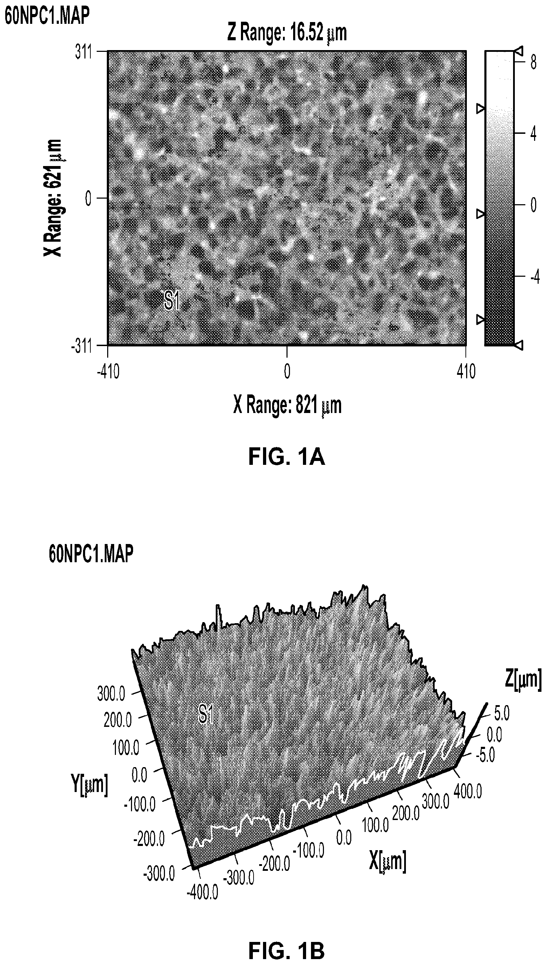

One method for producing a more isotropic surface on a work roll that is used to roll aluminum sheet metal (primarily for automotive sheet) is to surface the roll with an electric discharge texturing (EDT) machine. An EDT texturing head with multiple electrodes can be placed near the roll surface to generate an electric discharge/spark/arc from each electrode to the roll surface, locally melting the roll surface at each spark location and inducing the molten steel to form small pools of molten metal within associated craters. Operation of an EDT machine along the surface of a rotating roll produces an improved isotropic surface, but one which features numerous microscopic craters in the range of up to 100µm in diameter and with rim heights of up to 15∼20µm (Figure 1).

Applicants have recognized that the rims of the microscopic craters formed by the EDT process may be brittle, such that when the EDT textured rolls are used in a rolling mill, high contact pressure, e.g., up to 13,790 bar (200 ksi), between the work roll, the sheet and/or the backup roll, can wear down the isotropic texture and produce debris, which is deposited on the sheet surface, on the mill and in the lubricant.

FIG. 1 shows a sample surface morphology of a surface S1 of an EDT treated working roll used for the rolling of aluminum sheet. As can be appreciated, the surface morphology could be characterized as covered with numerous sharp peaks and valleys 5.0 µm in magnitude relative to a reference plane.

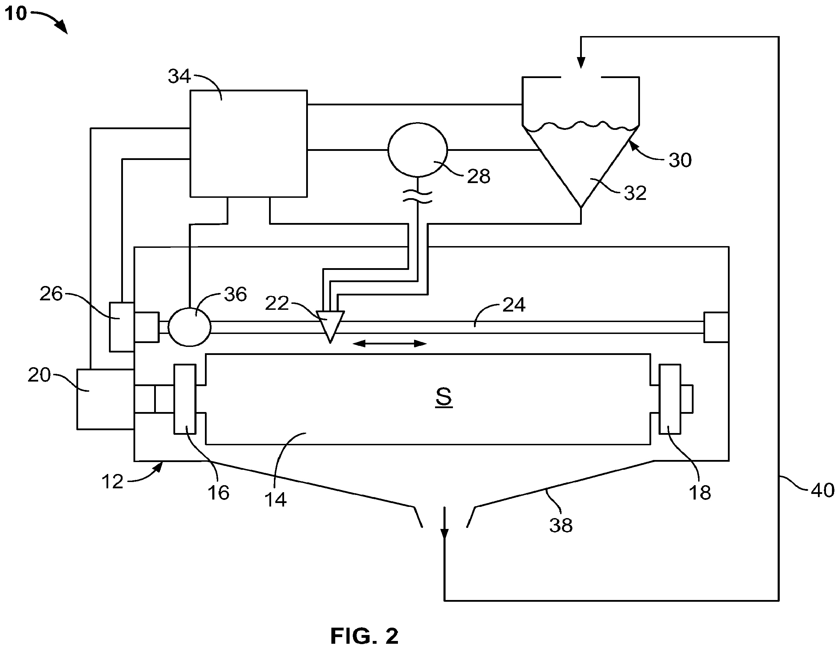

FIG. 2 shows a roll treating apparatus 10 having a cabinet 12 for containing a working roll 14. The working roll 14 may be supported on bearings 16, 18 to enable turning, e.g., by a motor 20 coupled to the working roll 14. The cabinet 12 also houses a shot/ ball peening nozzle 22 which may be mounted on a gantry 24 that allows the nozzle 22 to be selectively moved and positioned, e.g., by the action of a motor 26 turning a screw drive or actuating a chain, rack, cable drive, or actuation via a motor-driven friction wheel drive associated with the nozzle 22. The nozzle 22 is fed by a compressor 28 and a media hopper 30. The nozzle 22 mixes compressed gas, e.g., air, from the compressor 28 and media 32 from the hopper 30, propelling and directing the media 30 against the outer surface S of the roll 14. The media may be in the form of steel, glass or ceramic balls, abrasive grit or other blasting/shot peening media, as described further below. A computer 34 may be used to programmatically control: the position of the nozzle 22 by controlling the motor 26, the rotation of the roll by controlling motor 20, the operation of the compressor 28 and the rate of dispensing media 32 from the hopper 30. A vision system 36 may be housed within the cabinet 12 to provide a view of the state of the surface S in order to ascertain whether a given target surface texture has been achieved through operation of the action of the roll treating apparatus 10. This vision system may be attached to the nozzle 22 or independently moveable on the gantry 24, may include magnification and a shield to protect input aperture and lens from impact from the media 32. Media 32 that has been projected through the nozzle 22 may be dispensed through a funnel portion 38 of the cabinet 12 to a recycling line 40 that returns the media 32 to the hopper 30, e.g., via a screw feed or a under the influence of compressed air, a blower or suction. The cabinet 12 may be provided with a door (not shown) and sight glass (not shown) to facilitate transfer of the roll 14 in and out of the cabinet 12 and to monitor the operation of roll treating apparatus 10. The nozzle 22 and compressor 28 may be of a commercial type to achieve the target peeing intensities to create the desired surface topography.

Alternatively, the nozzle 22 may be hand-held, as in conventional shot-peening apparatus. The compressor 28 and the nozzle 22 may be changed to obtain the target peening intensity pressure output, i.e., either manually or under computer control, to regulate the velocity of media 32 projected from the nozzle 22 to accommodate different types of media 32, as well as to accommodate various operating conditions, such a roll 14 hardness, initial surface texture and the type of texture desired for surface S, e.g., attributable to the depth and circumference of dimples/craters made in the surface of the roll by a given media 32, such as steel balls/shot. The number of impacts and the dimensions of the impressions made by the media on the roll surface area relative to the total area can be described as, " % coverage" and can be adjusted by the compressor output setting, media flow rate and traverse speed of the nozzle 22 relative to the roll 14, as the nozzle 22 passes over the roll 14 and/or as the roll 14 is spun by motor 20. The control of the shot-peening process can be automatic or manual. For example, a person can manually hold, position and move the nozzle 22 and or the roll 14, as in traditional shot-peening operations wherein the person is equipped with protective gear and partially or fully enters into a cabinet containing the work piece. Visual or microscopic inspection of the roll may be conducted to verify suitable operation or to adjust the apparatus 10 and to verify an acceptably surfaced roll 14 at the completion of the peening/blasting operation.

As another alternative, the nozzle 22 may be contained within a portable, open-sided vessel (not shown) that presses against the surface S forming a moveable peening chamber that captures and redirects spent media back to a storage reservoir like hopper 30. This peening chamber may be positioned and moved manually or mechanically, such as, by a motor-driven feed mechanism like gantry 24 and optionally under the control of a computer 34.

The apparatus and methods of the present disclosure may be used to surface a working roll that imparts a given desired surface to sheet as it is rolled to size, e.g., to provide a sheet with an isotropically diffuse or bright appearance, eliminating the need to emboss or use a temper pass to create a textured sheet. In this context, "bright" refers to specular and "diffuse" refers to a non-specular appearance. The surface textures can be varied to achieve a given desired appearance and forming functionality associated with frictional properties by the appropriate choice of media and operating parameters.

In accordance with one aspect of the present disclosure, the desired texture is applied to a work roll surface, e.g. S, by a peening/blasting process that propels the selected media at the work roll surface S through a nozzle 22 by air pressure. The pressure, processing time per unit area, e.g., as a function of work roll 14 rotation speed and nozzle 22 traverse speed, nozzle 22 configuration and media 32 type are controlled to produce the desired work roll texture, which is effected by media 32 size, shape, density, hardness, velocity and resultant dimple/crater or indentation depth, width and shape and % coverage of dimples/craters on the treated surface area S. In accordance with some embodiments of the present disclosure, the media 32 chosen include spherical indenting media that produces smooth craters, such as high quality, precision steel ball bearings or shot, beads (glass, ceramic). Mixtures of beads and grit, such as aluminum oxide, silicon carbide or other grit types may be used depending upon the properties desired in the resultant surface.

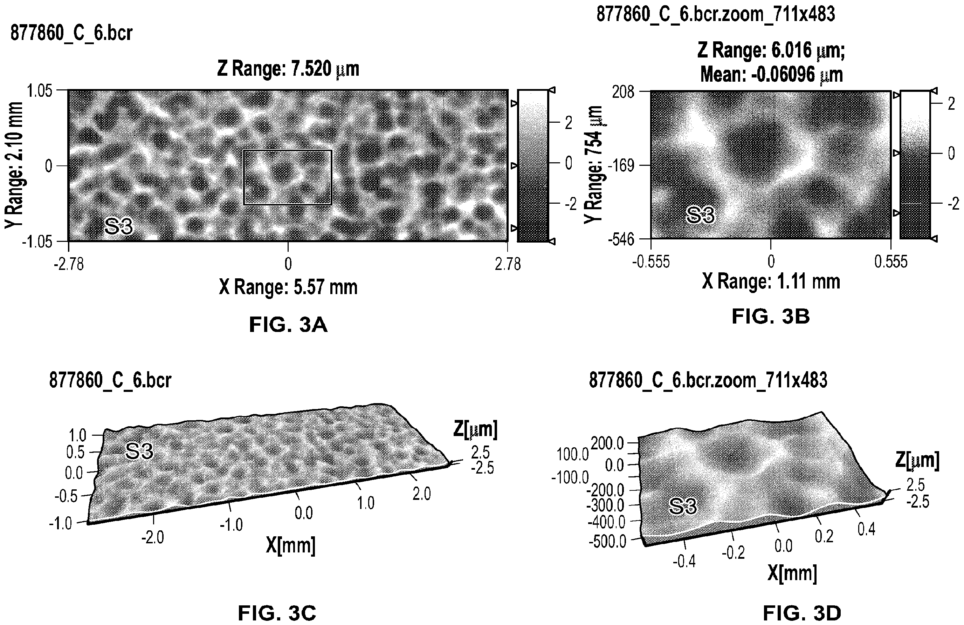

FIGS. 3a - 3d show graphical mappings of surface morphology as measured by optical profilometry of a work roll surface that has been surfaced in accordance with an embodiment of the present disclosure. The surface S3 shown in FIGS. 3a-3d has been peened with steel ball bearings of grade 1000 with a diameter of ≤ 0.3175 cm (0.125") and a hardness of Rc > 60. Grade 1000 has 0.00254 cm (0.001") spherical and ±0.0127 cm (0.005") size tolerances. Better grades of ball bearings may also be used. The stand-off distance of the nozzle 22 from the roll 14 may be about 2.54 cm (1 inch) to about 30.48 cm (12 inches), with a stand-off of about 12.7 cm (5 inches) being preferred for some applications. As can be appreciated, the use of ball bearings as peening media results in uniformly shaped craters on the work roll surface and the absence of the sharp, raised lips that are typical of EDT textures. More particularly, the use of spherical indenting media creates a plurality of smooth, central depressions mimicking the shape of the spheres/balls that make them, along with a smooth peripheral upwelling or lip around the depressions formed by the displacement of material from the depressions. Along the surface there is a gradual change in slope and abrupt ledges or discontinuities are minimized. In general, the depth of each depression at the center is below the mean or average height of the surface and apex of the peripheral lip is above the mean height. In order to make a smooth surface, the spherical indenting media must not be friable at the level of force required to create crators of appropriate depth. Otherwise, the spherical media will fracture and resultant sharp edges and flat facets on the broken media will cause the formation of facets on the surface of the work roll. These faceted impressions can occur on impact or later on when the spherical media is recycled and re-impacted against the surface. In addition to avoiding breakage of spherical media, it is beneficial if the force exerted by the media, considering the size, velocity and density of the spheres, does not create a trajectory upon impact that results in the formation of lateral furrows having a significant component of direction parallel to the surface of the work roll.

The generally smooth undulations in the surface S₃ of the work roll have a magnitude typically within the range of +/- 3 to 6 µm, however, craters of any desired magnitude, e.g., in excess of 10 µm or less than 3 µm, may be achieved, as desired. As described more fully below, the smooth undulating surface produced by spherical indenting media, such as ball bearings may be produced in random patterns, e.g., as would be expected of a shot peening operation or in discrete patterns, as explained below. A typical EDT surface has a greater number of severe surface variations. A work roll shot-peened with ball bearings, as described above, can be used to produce bright sheet with an isotropic appearance, depending upon the starting background roll surface. While grade 1000 ball bearings were described above, other types of precision balls may be used, depending upon roll hardness, such as higher grade ball bearings. As noted, the spherical media selected for indenting the surface of the roll are preferably selected with material properties, such as, density, hardness, elasticity, compression strength and tensile strength that allow the balls to impact and indent a roll of a given hardness without breaking or developing facets due to the impact.

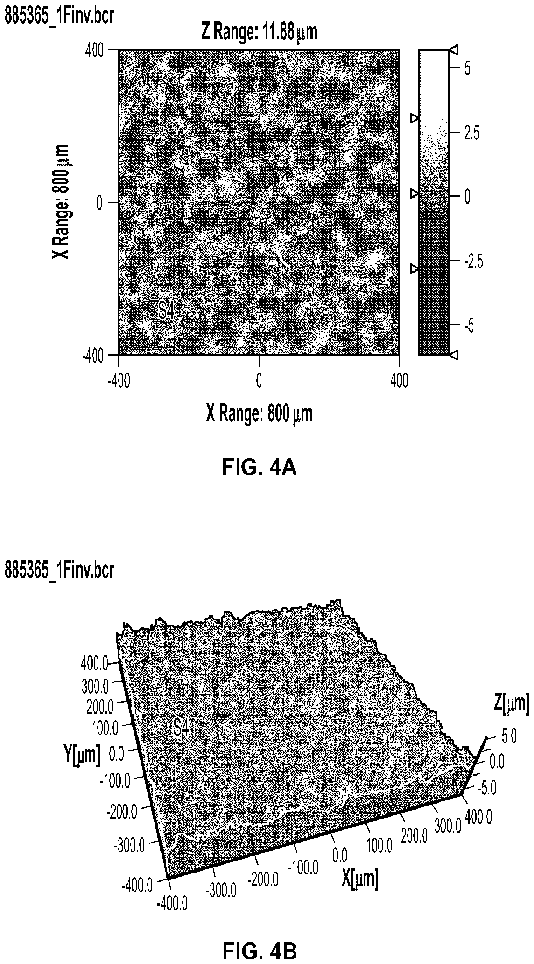

FIGS. 4a and 4b show a work roll surface S₄ produced in accordance with another embodiment of the present disclosure. More particularly, FIG. 4a is a plan view as measured by optical profilometry of the topology of a work roll surface that has been peened with aluminum oxide grit mixture (2:3 ratio of 120:180 grit) followed by glass beads of grade AC (60-120 mesh). The aluminum oxide grit blasting was carried out in a manner to remove the pre-grind roll pattern (as ascertained by visual evaluation), followed by blasting with the glass beads to achieve a desired diffuse surface appearance. FIG. 4b is a perspective (3D) graphical mapping of surface morphology of the surface S₄ shown in FIG. 4a, as measured by optical profilometry. As can be appreciated from FIGS. 4a and 4b, the use of glass beads results in a surface S₄ having fewer severe peaks than an EDT surface and the magnitude of surface variations is smaller than an EDT surface. FIG. 4b shows surface variations in the approximate range of +/- 2.0 µm. Accordingly, one could fairly characterize the resultant surface S₄ as smoother than an EDT surface, but still having a micro-roughness which may be used to impart a diffuse isotropic surface appearance to an aluminum sheet that is rolled by a working roll having this type of surface.

In accordance with the present disclosure, surface treatment of a work roll by peening results in a surface which is less brittle than a work roll surface treated by the EDT process. As a result, the work roll surface (texture) lasts longer, can sustain higher surface loading pressures and creates less debris when used in rolling operations. In accordance with an embodiment of the present disclosure, where spherical media, such as ball bearings or glass beads, are used to surface the work roll, the gently undulating surface texture produced on the work roll provides advantages in the rolling process to produce an isotropic surface. Compared to normal, ground work rolls or EDT surfaced work rolls, the gentle undulations promote lower friction between the sheet and the working rolls, enabling higher reductions in sheet thickness to be conducted before lubricant or roll surface failure. The texture of a work roll surfaced in accordance wih the present disclosure does not wear at the same rate as a typical ground work roll or an EDT surfaced roll. Experiments have shown that in a work roll-driven mill, the textures imparted to the roll by the methods of the present disclosure last 5 to 6 times longer than normally ground roll surfaces and that higher reductions are possible than those taken by EDT working rolls before exceeding mill horsepower limitations and experiencing lubricant failure. A roll surface morphology generated in accordance with an embodiment of the present disclosure can withstand greater than a 10% thickness reduction ratio to produce the desired textured sheet, e.g., up to 60%. This is in contrast to EDT surfaced working rolls which are typically operated in a range of about 8% to 10% reduction. Taking higher reductions can potentially allow elimination of an otherwise necessary pass(es) through the rolling mill to achieve the desired thickness.

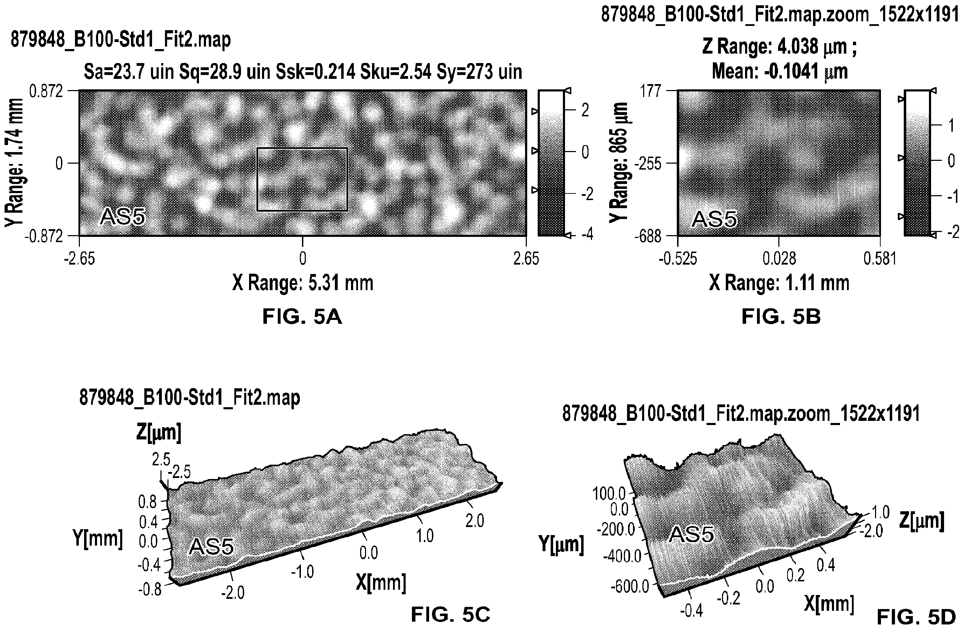

FIG. 5a shows a sample surface AS₅ of a rolled aluminum sheet in accordance with the present disclosure and rolled by a working roll 14 with a roll surface, such as the roll surface S₃ illustrated in FIGS 3a-3d, produced by a process in accordance with an embodiment of the present disclosure. FIG. 5b is enlarged view of the surface shown in FIG. 5a, both being rendered by optical profilometry. FIGS. 5c and 5d are perspective (3D) graphical mappings of the sample imaged in FIGS. 5a and 5b as measured by optical profilometry. The sheet produced as illustrated in FIGS 5a-5d were produced by shot-peening with precision steel ball bearings. As illustrated and in general, the macro-texture, e.g., peened dimples/indentations, imparted to sheet metal by the working rolls during rolling is the inverse of the texture on the work roll. However, both macro and micro features affect the final level of surface brightness, i.e., the final level of specular reflection, of the sheet.

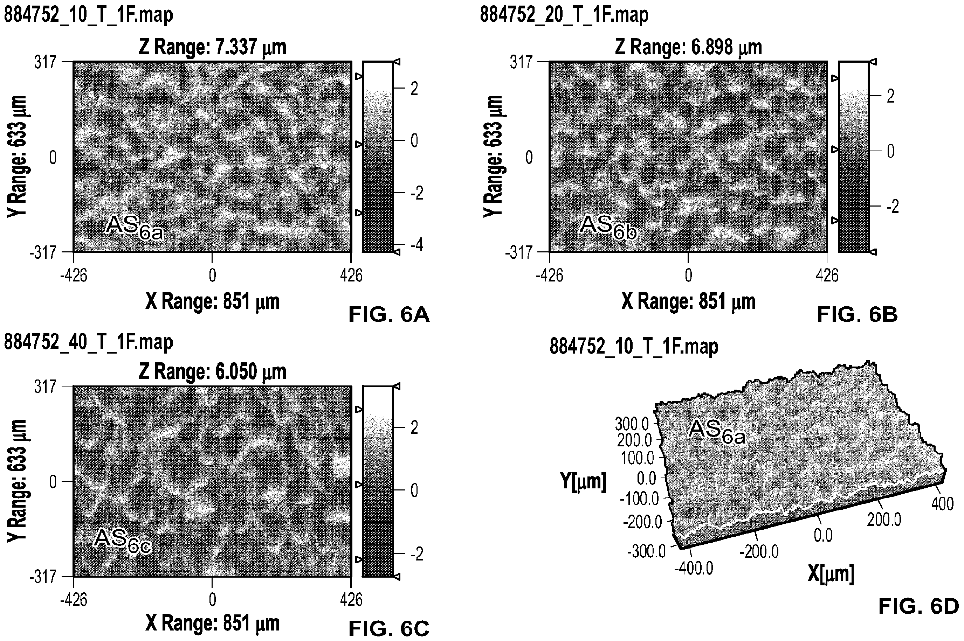

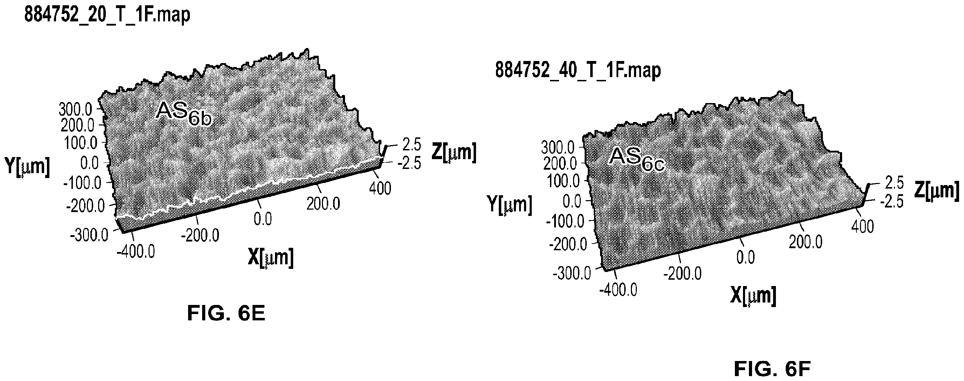

FIGS 6a, 6b and 6c show plan view graphical mappings of surface morphology of three surface samples AS₆ₐ, AS_{6b} and AS_{6c} of rolled aluminum sheet in accordance with an embodiment of the present disclosure and rolled by a working roll produced by a process in accordance with an embodiment of the present disclosure at 10% reduction, 20% reduction and 40% reduction, respectively, and as measured by optical profilometry. The working roll used to roll these samples was surfaced by shot-peening with aluminum oxide grit followed by shot-peening with glass beads, as described above relative to FIGS. 4a and 4b. FIGS. 6d, 6e, and 6f are perspective graphical mappings of the surfaces shown in FIGS 6a, 6b and 6c, respectively, as measured by optical profilometry.

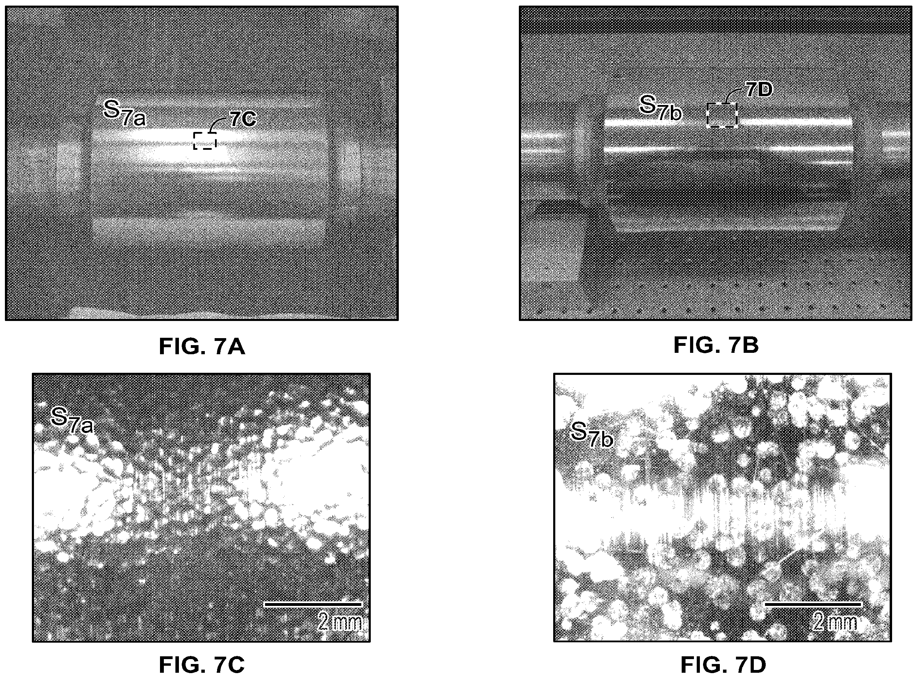

FIGS 7a and 7b are photographs of working rolls that have been surfaced in accordance with an embodiment of the present invention. FIGS. 7c and 7d are enlarged photographs of fragments of FIGS 7a and 7b, respectively. The roll shown in FIGS. 7a and 7c were shot-peened with class 1000 steel ball bearings of 1.6 mm in diameter. The roll was shot-peened under conditions that produced 100% coverage of the surface S₇ₐ of the roll with dimples/indentations. The roll shown in FIGS 7b and 7d were shot-peened with class 1000 steel ball bearings of 2.36 mm in diameter. The roll was shot-peened under conditions that produced 50% coverage of the surface S_{7b} of the roll with dimples.

In accordance with an embodiment of the present disclosure, sheet can be produced through normal rolling production schedules, eliminating the need to emboss or use a temper pass on the rolling mill. The resultant work roll surface textures do not wear as fast as EDT produced and normal ground roll surfaces. As a result, roll life exceeds 5 to 6 times that of normal rolls. On a work roll-driven mill, production is not limited to wide-to-narrow production schedules since the texture does not develop banding due to wear. As noted above, the sheet produced by a work roll surface shot-peened with, e.g., ball bearings, generates less debris than an EDT surfaced or normal ground surface, resulting in cleaner lubricant and sheet during rolling. The resultant sheet is isotropic in appearance.

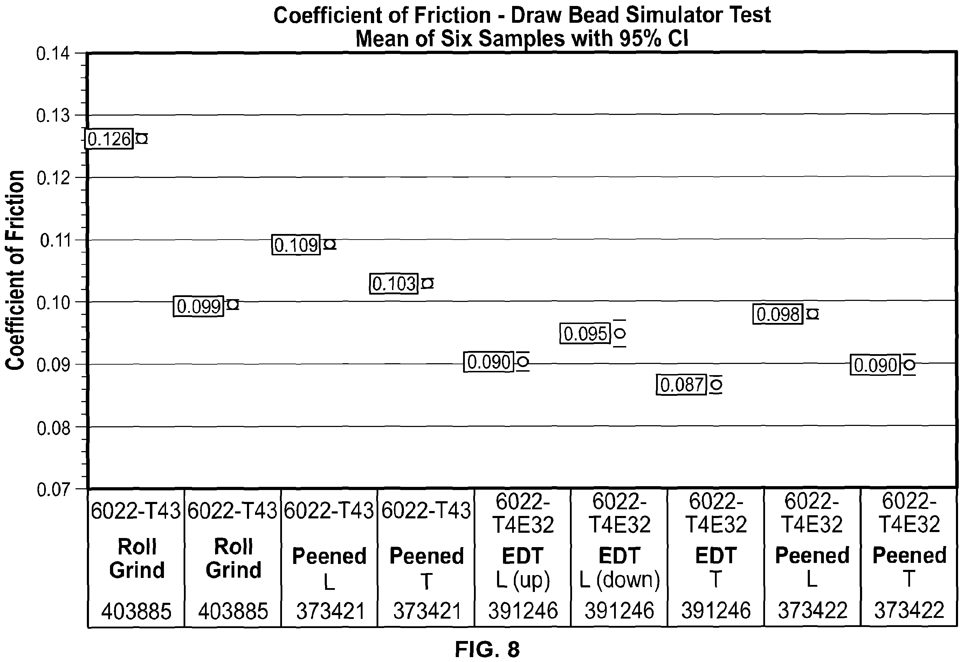

FIG. 8 shows the directionally dependent coefficient of friction during a forming operation of various surfaces when forming is performed in longitudinal (L) and transverse (T) directions. As to the sample 6022-T43, the peened surface showed a reduction in friction on average and a smaller variation in friction dependent upon the direction of forming. Isotropic frictional interaction with forming tools, such as those used in drawing and ironing may represent an improvement in forming performance, e.g., producing more uniform drawing and extended drawing limits.

In accordance with the present disclosure, the initial surface finish requirements for the work roll before peening, e.g., with ball bearings, depends on the final sheet appearance requirement, e.g., highly specular or somewhat specular. The background roughness is preferred to be <0.0254 mm (1 µin) if a highly specular isotropic surface is desired. If a less specular surface is required, the initial work roll grind can be any desired grind up to 1.27 mm (50 µin). The amount of pre-grind desired impacts the final cost of the entire process since it is generally more expensive to produce a surface finish <0.0254 mm (1 µin) roughness. The initial surface finish requirements for the work roll before peening with glass beads or other media to produce a diffuse surface is preferred to be <0.381 mm (15µin) or a roughness such that the roll grind pattern is not visible on the peened work roll after processing. The removal of the background roll grind during glass bead peening will be dependent upon the peening processing parameters chosen to produce the diffuse finish. The present disclosure is further illustrated by the following examples.

### Example 1

FIGS 3a-d, 7a and 7c show images of an exemplary surface S3, S7a of a working roll made in accordance with an exemplary embodiment of the present disclosure.

To generate the surface shown, a background roll topography is created with standard grinding processes (pre-grind) of about <0.127 mm (5 µin) roughness. A series of dimples ranging in diameter from 200 to 300µm are produced on the roll surface by shot-peening with class 1000 steel balls of 1.6 mm in diameter and hardness Rc ≥ 60. The balls are propelled against the surface of a roll having a hardness of about 58 to 62 Rc, at a velocity causing a dimple diameter of about 200µm to 400µm and a dimple depth of about 0.5µm to about 4µm. Dimple diameter and depth are affected by processing conditions (ball velocity) and are dependent upon the initial work roll hardness. In this example, about 100% of the surface area is covered by dimples, as measured by visual inspection, but coverage can range from about 10% to about 250%, depending upon the desired surface appearance finish. A coverage of 60% to 100% provides a work roll surface that produces aluminum sheets with desirable optical and mechanical properties. The % coverage measured can vary depending upon the method of measuring. Optical methods tend to over-estimate coverage when compared to physical measurement from topographical images.

The benefits experienced with use of these rolls in breakdown rolling include: pass elimination (1 pass eliminated in cold rolling, 3 passes eliminated in hot rolling); the ability to roll narrow to wide; increased roll life; less roll coating developed in hot rolling due to reduced material transfer; and reduced debris generation in cold rolling.

### Example 2

In accordance with another exemplary embodiment of the present disclosure, a diffuse surface work roll may be made by peening a working roll that is pre-ground at < 0.127 mm (5 microinch) roughness The media may be glass bead, other "ceramic" beads of grade A to AH which are mesh sizes 20-30 to 170-325 or other hard abrasive particles, such as aluminum oxide (grit sizes to 12 to 400). A combination of glass beads, ceramic beads and aluminum oxide media, applied in succession, may be required to produce a surface finish like that shown in FIGS. 4a and 4b. For example, the roll surface is first processed with aluminum oxide of mixed grit sizes (2:3 ratio of 120 and 180 grits) with a 0.794 cm (5/16") nozzle and 4.48 bar (65 PSI) at a traverse speed of 3.81 cm (1.5") per minute followed by glass beads grade AC (mesh size 60-120) at 6.9 bar (100 PSI) using a 0.953 cm (3/8") nozzle and traverse speed of 3.81 cm (1.5") per minute. The standoff distance was adjusted based on the nozzle bristle lengths of the particular peening system. Choices of nozzles, pressures and traverse speeds would be dependent upon the apparatus used to peen. The percent area of coverage can range from 10% to 250% depending upon the desired surface finish.

A working roll surfaced in accordance with the above parameters may be operated at reductions between 10 to 60% (in contrast to EDT treated rolls which are typically operated at reduction of about 8% to 10%). The higher level of reduction may be utilized to eliminate one or more reduction passes that might otherwise be required to achieve a desired thickness and surface appearance. The resultant sheet has an isotropic appearance and isotropic functionality.

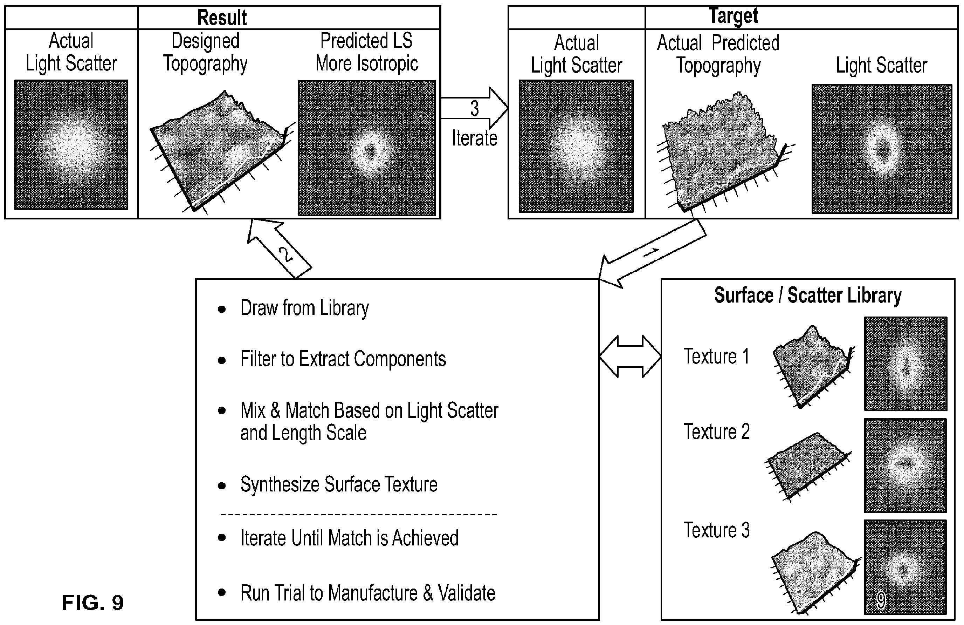

FIG. 9 shows a diagram of a process for developing a surface texture in accordance with an exemplary embodiment of the present disclosure. In a first stage (I) (not shown), the surface
topologies that are obtained by using a range of peening conditions and media types are predicted. For a work roll surface treated by shot-peening, the media size, composition and peening process conditions, such as velocity and % coverage, may be selected to control the desired final texture of the roll, which is then imparted to the rolled product. The relationships between these variables (media size, composition and peening process conditions) and the surfacing results obtained may be recorded and used as a basis for predictive computer modeling at stage I for any given set of parameters to produce the roll surface texture.

In the next stage (II) (shown in FIG. 9), the light scatter and appearance for a given set of real or hypothesized surface topographies are predicted. As shown in FIG. 9, modeling may include selecting a "target" surface which has specific optical properties, such as predicted light scatter, e.g., to yield a given degree of brightness. A method for generating aluminum sheet having the desired optical properties may then be pursued by the following steps. (A) accumulating a data file which associates a plurality of given surface profiles with corresponding optical properties of each surface profile, including light scatter, length scale and surfacing treatment parameters utilized to realize each of the plurality of surfaces; (B) implicitly prescribing a virtual surface by specifying target optical properties; (C) modeling the virtual surface by retrieving data pertaining to at least one surface profile with the most similar measured or predicted optical properties as the target optical properties; (D) comparing the target optical properties to the optical properties of the at least one surface profile; (E) in the event that the comparison in step (D) does not indicate identity, then retrieving data pertaining to another surface profile in the data file that has measured or predicted optical properties that are similar to the target properties but are at variance to the target properties in an opposite respect relative to how the optical properties of the at least one given surface profile differ from the target properties; (F) sampling from the optical properties of the at least one surface profile and from another surface profile in proportion to the magnitude of their respective differences from the target properties to arrive at corrected optical properties of a corrected virtual surface and recording the composited sampled composition contributions of the at least one surface profile and the other surface profile; (G) comparing the optical properties of the corrected virtual surface to the target optical properties to ascertain the reduction in the differences there between; and then repeating the steps (E) - (G) until little or no improvement is discerned, whereupon the best virtual surface relative to the target has been ascertained.

Note that steps (C) through (G) can be executed as described or can be replaced by a nonlinear least squares optimization algorithm to automate the process. To complete the process, the Modeling steps (I) and (II) are combined. Namely, by:(1) ascertaining the surfacing treatment parameters utilized to realize each of the plurality of surfaces by compositing such parameters in proportion to the contribution of optical properties of each surface profile composited in the best virtual surface thereby defining best surfacing treatment parameters; (2) conducting surfacing of a roll in accordance with the best surfacing treatment parameters; and (3) rolling the aluminum sheet with the roll surfaced at step (I). As can be seen, upon reaching a modeled solution, the shot-peening parameters associated there with may be implemented in surfacing a work roll. The actual results of implementation may be stored in the database along with the process parameters that caused them to expand the modeling capability.

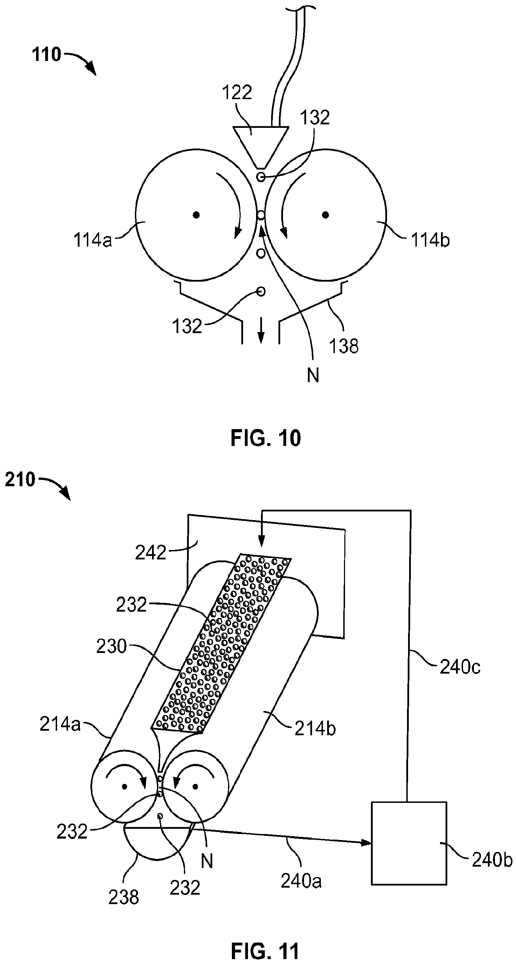

FIG. 10 shows an alternative apparatus 110 for surfacing work rolls 114a, 114b in accordance with another embodiment of the present disclosure. During the surfacing process to be described below, the work rolls 114a, 114b are arranged in parallel and are rotatable relative to each other, being supported on the ends by suitable bearings (not shown), like 16, 18 of FIG. 2 and driven by a motor or motors (not shown) like motor 20 shown in FIG. 2. A media nozzle 122 like nozzle 22 of FIG. 2 may be retained on a gantry for moving or positioning the nozzle 122 along the length of the rolls 114a, 114b proximate to where they converge, which may be called a nip N. The nozzle 122 can dispense media, e.g., ball bearings 132 into the nip area N, such that when the rolls 114a, 114b are turned in the directions shown by the arrows, the balls 132 will be drawn between the rolls. Unlike nozzle 22, the nozzle 122 need not propel the balls 132 under pressure to achieve a high velocity, but may merely dispense the balls 132 in a controlled manner. If the space between the rolls 114a, 114b is smaller than the diameter of the balls 132, then a state of mechanical interference is achieved when they are drawn into the nip N. Given that the balls 132 are of comparable or greater hardness than the surface of the rolls 114a, 114b and are sufficiently elastic, having an adequate compression strength to pass through the nip N without breaking, they will induce the formation of craters in the surface of the rolls 114a, 114b as they pass through the nip N. The craters are formed in the surface of the rolls 114a, 114b by compression rather than from the force of impact of balls projected at the surface at high velocity. After passing through the nip N, the balls 132 may be collected in a gutter or hopper 138 for re-use. The rolls 114a, 114b may be adjustable to allow them to be moved closer together or farther apart, narrowing or widening the nip N, to adjust to different size balls 132 and/or to control the depth of the craters that are formed on the rolls 114a, 114b.

FIG. 11 shows a similar apparatus as FIG. 10 with another type of ball feeding mechanism, viz., an elongated hopper/funnel 230, which is capable of holding and dispensing a supply of balls 232, such that the area between the nip N and the hopper/funnel 230 is filled to capacity with balls 132 at all times. More particularly, balls 232 passing through the nip act as a stopper line causing balls falling through the hopper funnel 230 to back up and prevent more balls from falling out. The funnel/ hopper 230 may be closely fitted to the generally V-shaped area defined by the rolls 214a, 214b above the nip N, such that balls 232 can not pass between the rolls 214a, 214b and the funnel/hopper 230. As balls 232 pass through the nip N, more balls flow out of the hopper/funnel 230 to replace them, The used balls 232 are collected in gutter 238 and recycled via lines 240a, 240c and recycling apparatus 240b . A barrier 242 on either end of the rolls 214a, 214b (only one shown) can be used to prevent the balls 232 from flowing over the ends of the rolls 214a, 214b, containing the balls 232 in the V-shaped area.

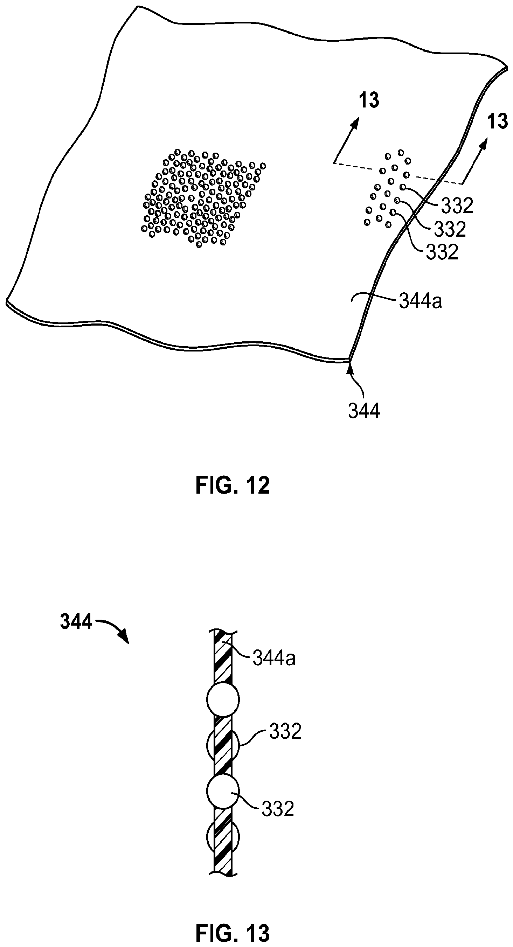

FIGS. 12 and 13 show a media sheet 344 for surfacing a work roll in accordance with another embodiment of the present disclosure. The media sheet 344 may have a web portion 344a, e.g., made from an elastomer, in which surfacing media, such as spherical indentors 332 like ball bearings are embedded. Alternatively, the web portion 344a could be made from a sheet of paper or polymer to which the surfacing media is adhered by glue. The media sheet 344 may be employed with a surfacing apparatus 110, 210 like those shown in FIGS. 10 and 11, namely, by passing the media sheet 344 through the nip N in place of loose balls 132, 232. If the web portion 344a is resilient enough and holds the balls 332 tightly, it may be possible to make a continuous loop with the media sheet 344 allowing it to be cycled between the rolls 214a, 214b until the desired crater coverage is realized. As shown in FIG. 12, the balls 332 may be distributed over the media sheet 344 in any desired pattern, such as a comprehensive, evenly spaced coverage of the entire media sheet 344, a more dispersed pattern or a random distribution.

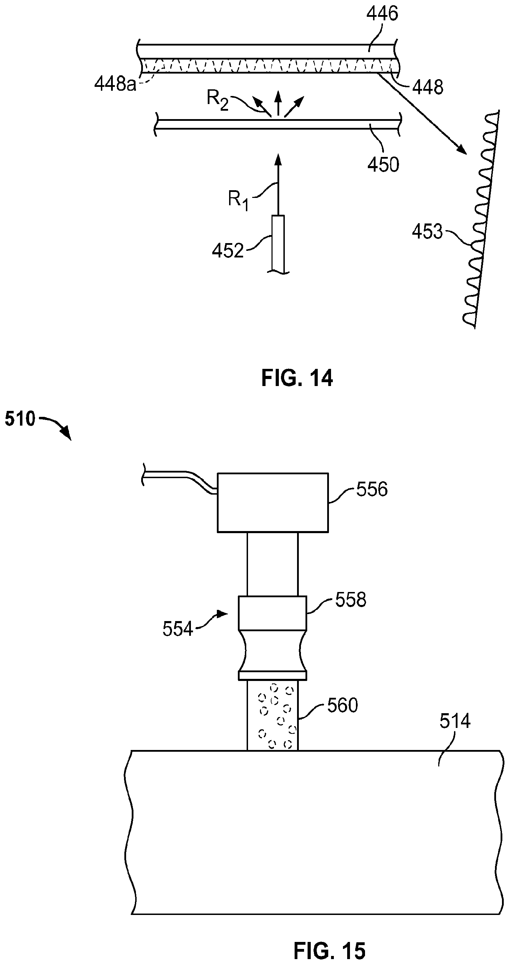

FIG. 14 diagrammatically shows a support surface 446, e.g., glass, coated with a layer of photoresist or a photopolymer 448. A source of radiation 452, such as a UV light, an electron beam or a laser, emits radiation, R1. In the case of light, an optional radiation distribution element 450, such as a mask or a lens array, distributes the radiation R1 into a distributed array of radiation R2 that impinges on the photoresist layer 448 creating an undulating pattern 448a of greater and lesser light exposure. Upon development of the photoresist, a surface having a desired smoothly contoured texture may be formed. Alternatively, the layer of photoresist may be exposed/shaped by a laser scanner or electron beam scanner to generate the desired pattern of exposure and resultant surface profile upon development.

As described in U.S Patent No. 7,094,502 to Schaefer et al., which is owned by the assignee of the present application and which is incorporated herein in its entirety by reference, a shim 453 may be grown from the surface profile of the developed photoresist layer 448. As further described in 7,094,502, the shim 453 may be hardened via various plating and coating processes to allow it to impressed upon the surface of a metal roll to allow the surface texture thereof to be transferred to the surface of the roll, and then, subsequently, to a product surface. In accordance with one aspect of the present disclosure, a shim 453 having a smoothly undulating surface profile may be used to impart that texture to a working roll, like roll 114a and or 114b. For example, a shim 453 of this nature could be used like the media sheet 344, passing the shim 453 between rolls 214a, 214b of the apparatus 210 of FIG. 11. In order to surface both rolls 214a, 214b simultaneously, two shims 453 placed back to back or a shim 453 with two textured faces could be employed. As another alternative, a textured shim 453 could be affixed to the surface of a work roll, e.g., 214a by adhering it to the roll via adhesives, brazing or welding and then used to roll aluminum sheet.

FIG. 15 diagrammatically shows an ultrasonic ball peening apparatus 510 for surfacing a work roll 514 in accordance with another embodiment of the present disclosure. Ultrasonic ball peening devices are available commercially, .e g., from Sonats SA, Nantes, Carquefou, France. In accordance with the present disclosure, such ball peening devices may be applied to the purpose of surfacing working rolls for rolling sheet aluminum, i.e., if the velocity, density, size, elasticity, and compression strength of the balls are such that the appropriate crater depth is realized on the surface of the treated roll without peening media breakage/degradation.

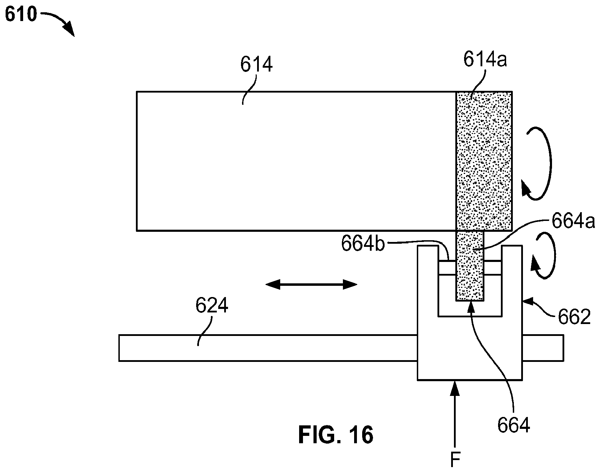

FIG. 16 shows an apparatus 610 for surfacing a work roll 614 in accordance with another embodiment of the present disclosure. A knurling head 662 supports a knurling wheel 664 having a textured surface 664a. The knurling wheel 664 is rotatable on an axle 664b and is urged into the surface of the work roll 614 under the influence of a substantial force F. Since the contact area of the knurling wheel 664 and the work roll 614 is very small, the force F is concentrated over a small area, allowing the texture of the surface 664a to be transmitted to the roll 614, as shown by the area 614a. A gantry 624 may be used to allow the knurling head 662 to traverse the work roll 614 to impart the desired texture over the entire roll 614. The work roll 614 may be rotated by an electric motor inducing the knurling wheel 664 to rotate as it textures the work roll 614. An aspect of the present disclosure is to ensure that the resultant surface 614a (or the resultant surfaces of a work roll processed by the apparatus described with reference to FIGS. 10-15) has a conformation consistent with the beneficial texture described above, e.g., that achieved by shot peening with ball bearings, such as described above referring to FIGS. 3a-3d. The texturing of a work roll 614 using the apparatus 610 may require more than one traversal by the knurling head 662, depending upon the density of the surface texture of the surface 664a (undulations per unit area) and the coverage % desired.

It will be understood that the embodiments described herein are merely exemplary and that a person skilled in the art may make many variations and modifications without departing from the scope of the claimed subject matter. For example, some disclosure above indicated that the range of roughnesses (roll grind) that are typically applied to aluminum rolling operations covering hot and cold rolling applications span <0.0254 mm (1 µin) to 1.27 mm (50 µin) and that typical work roll hardnesses for Al operations is 50 to 70 Rc. Notwithstanding, the methods and apparatus of the present disclosure could be applied to any surface finish above 1.27 mm (50 µin) and any roll hardness to achieve the same results by adjusting the peening media and peening parameters, such as pressure and dwell time to affect % coverage. All such variations and modifications are intended to be included within the scope of the appended claims.

## Claims

1. A method for surfacing a work roll for rolling aluminum sheet, comprising the following steps:
- indenting a surface of the work roll with spherical media; and
- producing a surface 60% to 100% covered by the indentations, the indentations lacking facets.

2. The method of Claim 1,
wherein the indentations have a depressed central area relative to a mean height of the surface and a raised, smooth peripheral lip having a greater height at an apex thereof than the mean height of the surface; and
wherein the indentations have a diameter in the range of 200µm to 400µm and a depth relative to the apex of the peripheral lip in the range of 0.5 µm to 2.0 µm.

3. The method of Claim 1 or 2,
wherein the spherical media used for indenting is steel ball bearings, wherein the ball bearings preferably have a diameter ≤ 3.17 mm (0.125 inches) and a hardness Rc ≥ 60; or
wherein the spherical media used for indenting is ceramic balls.

4. The method of Claim 1, further comprising the steps of:
- installing the surfaced work roll in a rolling mill; and
- rolling the aluminum sheet to reduce the aluminum sheet from a given initial thickness to a selected thickness and simultaneously imparting a texture from the work roll onto the surface of the aluminum.

5. The method of Claim 4, wherein the indentations have a depressed central area relative to a mean height of the surface and a raised, smooth peripheral lip having a greater height at an apex thereof than the mean height of the surface the indentations having a diameter in the range of 200µm to 400µm and a depth relative to the apex of the peripheral lip in the range of 0.5 µm to 2.0µm and wherein the reduction in thickness of the aluminum sheet is in the range of 10 to 60% of the initial thickness.

6. The method of Claim 4 or 5, further comprising the step of pre-grinding the work roll prior to step of surfacing, the step of pre-grinding imparting a first surface texture on the roll, the step of surfacing imparting a second surface texture on the roll at least partially over-struck on the first surface texture and incompletely eradicating the first surface texture, such that a composite surface texture is formed.

7. The method of one of the Claims 4 to 6, wherein the step of indenting is by shot peening, which may be conducted at an adjustable pressure to control media velocity and momentum when the media impacts the roll, the media and the velocity thereof corresponding to a media impression depth, width and shape on the surface of the roll and further comprising the step of adjusting the pressure at which shot peening is conducted to achieve a given surface texture, said surface texture of the roll being preferably optically diffuse and specular.

8. The method of Claim 7, wherein the dwell time of shot peening of the roll surface is adjustable to control the number of impacts of the media on the surface of the roll and the consequential % coverage of media impressions on the surface of the roll and further comprising the step of adjusting the dwell time to achieve a given surface texture.

9. The method of one of the Claims 4 to 8, further comprising the steps of rolling a plurality of sheets of aluminum, the sheets differing in width and at least one variation in width resulting in rolling a narrower sheet followed by rolling a wider sheet.

10. The method of one of the Claims 4 to 9, further comprising the step of adjusting the velocity of the media, wherein the adjustment of the velocity of the media is determined at least partially based upon the hardness of the roll and/or is determined at least partially by the initial surface texture of the roll prior to shot-peening.

11. A work roll for rolling aluminum sheet metal surfaced by the method of one of the Claims 1 to 10.

## Patentansprüche

1. Verfahren zur Oberflächenbehandlung einer Arbeitswalze zum Walzen von einem Aluminiumblech, das folgende Schritte aufweist:
- Einkerben einer Oberfläche der Arbeitswalze mit kugelförmigen Medium;
- Herstellen einer Oberfläche, die 60% bis 100% durch die Einkerbungen bedeckt ist, wobei die Einkerbungen keine Facetten aufweisen.

2. Verfahren gemäß Anspruch 1,
wobei die Einkerbungen einen herabgedrückten zentralen Bereich, und zwar relativ zu einer Durchschnittshöhe der Oberfläche, und eine erhöhte, glatte periphere Lippe aufweisen, die eine Höhe an einer Spitze hiervon aufweist, die höher ist als die Durchschnittshöhe der Oberfläche;
wobei die Einkerbungen einen Durchmesser im Bereich von 200 µm bis 400 µm und eine Tiefe relativ zu der Spitze der peripheren Lippe in einem Bereich von 0,5 µm bis 2 µm aufweisen.

3. Verfahren gemäß Anspruch 1 oder 2,
wobei das kugelförmige Medium, das zum Einkerben verwendet wird, Stahlkugellager-Kugel sind,
wobei die Kugellager-Kugeln vorzugsweise einen Durchmesser von ≤ 3,17 mm (0,125 inch) und eine Härte RC ≥ 60 aufweisen; oder
wobei das kugelförmige Medium, das zum Einkerben verwendet wird, Keramikkugeln sind.

4. Verfahren gemäß Anspruch 1, das ferner folgende Schritte aufweist:
- Montieren der oberflächenbehandelten Walze in einer Walzanlage;
- Walzen des Aluminiumblechs, um die Dicke des Aluminiumblechs von einer gegebenen Ausgangsdicke auf eine gewählte Dicke zu reduzieren und gleichzeitig eine Struktur von der Arbeitsrolle auf die Oberfläche des Aluminiums weiterzugeben.

5. Verfahren gemäß Anspruch 4,
wobei die Einkerbungen einen herabgedrückten zentralen Bereich, und zwar relativ zu einer Durchschnittshöhe der Oberfläche, und eine erhöhte, glatte periphere Lippe aufweisen, die an einer Spitze hiervon eine höhere Höhe aufweist als die Durchschnittshöhe der Oberfläche der Einkerbungen, die einen Durchmesser in einem Bereich von 200 µm bis 400 µm und eine Tiefe relativ zu der Spitze der peripheren Lippe in einem Bereich von 0,5 µm bis 2 µm aufweisen, und wobei die Dickenreduzierung des Aluminiumblechs in einem Bereich von 10% bis 60% der Ursprungsdicke ist.

6. Verfahren gemäß Anspruch 4 oder 5,
das ferner vor dem Schritt der Oberflächenbehandlung einen Schritt zum Vor-Schleifen der Arbeitsrolle aufweist, wobei der Schritt zum Vor-Schleifen eine erste Oberflächenstruktur auf die Rolle weitergibt, wobei der Schritt der Oberflächenbehandlung eine zweite Oberflächenstruktur auf die Rolle weitergibt, die die erste Oberflächenstruktur zumindest bereichsweise überlagert und die erste Oberflächenstruktur derart unvollständig entfernt, dass eine zusammengesetzte Oberflächenstruktur ausgebildet ist.

7. Verfahren gemäß einem der Ansprüche 4 bis 6,
wobei der Schritt des Einkerbens mittels Kugelstrahlen durchgeführt wird, das bei einem einstellbaren Druck ausgeführt werden kann, um die Mediums-Geschwindigkeit und den Impuls zu steuern, wenn das Medium auf die Walze aufprallt, wobei das Medium und die Geschwindigkeit hiervon einer Medium-Eindrucktiefe, Weite und Form auf der Oberfläche der Walze entsprechen,
und ferner einen Schritt zum Einstellen des Druckes aufweist, bei dem Kugelstrahlen durchgeführt wird, um eine vorgegebene Oberflächenstruktur zu erreichen, wobei die Oberflächenstruktur der Walze vorzugsweise optisch streuend und spiegelnd ist.

8. Verfahren gemäß Anspruch 7,
wobei die Druckhaltezeit des Kugelstrahlens der Walzenoberfläche einstellbar ist, um die Aufprallanzahl des Mediums auf die Oberfläche der Walze und die daraus folgende prozentuale Abdeckung der Medium-Einkerbungen auf der Oberfläche der Walze zu steuern,
und ferner einen Schritt zum Einstellen der Druckhaltezeit aufweist, um eine vorgegebene Oberflächenstruktur zu erreichen.

9. Verfahren gemäß einem der Ansprüche 4 bis 8,
welches ferner einen Schritt zum Walzen einer Vielzahl von Aluminiumbleche aufweist, wobei die Bleche sich in der Breite unterscheiden und zumindest eine Variation der Breite daraus resultiert, dass ein schmaleres Blech gefolgt von einem breiteren Blech gerollt wird.

10. Verfahren gemäß einem der Ansprüche 4 bis 9,
welches ferner einen Schritt zum Einstellen der Geschwindigkeit des Mediums aufweist, wobei das Einstellen der Geschwindigkeit des Mediums zumindest teilweise basierend auf der Härte der Walze bestimmt wird und/oder zumindest teilweise mittels der Ausgangsoberflächenstruktur der Walze vor dem Kugelstrahlen bestimmt wird.

11. Arbeitswalze zum Walzen von Aluminiummetallblechen, die mittels dem Verfahren gemäß einem der Ansprüche 1 bis 10 oberflächenbehandelt ist.

## Revendications

1. Procédé pour traiter la surface d'un cylindre de travail pour le laminage de tôles d'aluminium, comprenant les étapes suivantes consistant à :
- faire des creux une surface du rouleau de travail avec des produits sphériques ; et
- produire une surface couverte de 60 % à 100 % par les creux, les creux étant dépourvus de facettes.

2. Procédé selon la revendication 1, dans lequel les creux ont une zone centrale en dépression par rapport à une hauteur moyenne de la surface, et une lèvre dressée périphérique lisse ayant une hauteur plus élevée à son sommet que la hauteur moyenne de la surface ; et
dans lequel les creux ont un diamètre dans la plage de 200 µm à 400 µm et une profondeur relative au sommet de la lèvre périphérique dans la plage de 0,5 µm à 2,0 µm.

3. Procédé selon la revendication 1 ou 2,
dans lequel le produit sphérique utilisé pour produire les creux sont des billes en acier pour paliers,
dans lequel les billes pour paliers ont de préférence un diamètre ≤ 3,17 mm (0,125 pouces) et une dureté Rc ≥ 60 ; ou
dans lequel le produit sphérique utilisé pour produire les creux sont des billes en céramique.

4. Procédé selon la revendication 1, comprenant en outre les étapes consistant à :
- installer le cylindre de travail à surface traitée dans un train de laminage ; et
- laminer la feuille d'aluminium pour réduire la feuille d'aluminium depuis une épaisseur initiale donnée jusqu'à une épaisseur sélectionnée, et imposer simultanément une texture depuis le rouleau de travail sur la surface de l'aluminium.

5. Procédé selon la revendication 4, dans lequel les creux ont une zone centrale en dépression par rapport à une hauteur moyenne de la surface, et une lèvre périphérique dressée lisse ayant une hauteur plus grande à son sommet que la hauteur moyenne de la surface, les creux ayant un diamètre dans la plage de 200 µm à 400 µm et une profondeur, par rapport au sommet de la lèvre périphérique, dans la plage de 0,5 µm à 2,0 µm, et dans lequel la réduction d'épaisseur de la tôle d'aluminium est dans la plage de 10 à 60 % de l'épaisseur initiale.

6. Procédé selon la revendication 4 ou 5, comprenant en outre l'étape consistant à faire un meulage préliminaire du cylindre de travail avant l'étape de traitement de surface, l'étape de meulage préliminaire impose une première texture de surface sur le cylindre, l'étape consistant à traiter la surface impose une seconde texture de surface sur le cylindre, au moins partiellement en superposition sur la première texture de surface, et supprimant de façon incomplète la première texture de surface, de telle sorte qu'il se forme une texture de surface composite.

7. Procédé selon l'une des revendications 4 à 6, dans lequel l'étape consistant à produire des creux a lieu par grenaillage, qui peut être exécuté à une pression ajustable pour commander la vitesse et l'énergie cinétique du produit lorsque le produit vient en impact sur le cylindre, le produit et sa vitesse correspondant à une profondeur, une largeur et une forme d'impression du produit sur la surface du cylindre, et comprenant en outre l'étape consistant à ajuster la pression à laquelle le grenaillage est exécuté pour obtenir une texture de surface donnée, ladite texture de surface du cylindre étant de préférence diffuse et spécularisée sur le plan optique.

8. Procédé selon la revendication 7, dans lequel le temps de traitement du grenaillage de la surface du cylindre est ajustable pour commander le nombre d'impacts du produit sur la surface du cylindre et par conséquent le pourcentage de couverture des impressions faites par le produit sur la surface du cylindre, et comprenant en outre l'étape consistant à ajuster le temps de traitement pour atteindre une texture de surface donnée.

9. Procédé selon l'une des revendications 4 à 8, comprenant en outre les étapes consistant à laminer une pluralité de tôles d'aluminium, les tôles ayant des largeurs différentes et au moins une variation en largeur résultant du laminage d'une tôle plus étroite suivi du laminage d'une tôle plus large.

10. Procédé selon l'une des revendications 4 à 9, comprenant en outre l'étape consistant à ajuster la vitesse du produit, dans lequel l'ajustement de la vitesse du produit est déterminé au moins partiellement sur la base de la dureté du cylindre et/ou est déterminé au moins partiellement par la texture de surface initiale du cylindre avant le grenaillage

11. Cylindre de travail pour laminer des tôles métalliques d'aluminium, traité en surface par le procédé selon l'une des revendications 1 à 10.
